(19) Europäisches Patentamt / European Patent Office / Office européen des brevets

(11) **EP 4 779 954 A1**

(12) **EUROPEAN PATENT APPLICATION**

(43) Date of publication:
22.07.2026 Bulletin 2026/30

(21) Application number: 26152429.2

(22) Date of filing: 16.01.2026

(51) International Patent Classification (IPC):
$H04L\ 67/10^{(2022.01)}$ $\quad G06F\ 9/50^{(2006.01)}$
$H04L\ 67/1008^{(2022.01)}$ $\quad H04L\ 67/1012^{(2022.01)}$
$H04L\ 67/289^{(2022.01)}$

(52) Cooperative Patent Classification (CPC):
H04L 67/10; G06F 9/5027; G06F 9/5044;
G06F 9/505; G06F 9/5072; G06F 9/5088;
H04L 67/1008; H04L 67/1012; H04L 67/289;
G06F 2209/5017; G06F 2209/509

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.01.2025 GB 202500753

(71) Applicant: Vodafone Group Services Limited
Newbury RG14 2FN (GB)

(72) Inventors:
• MEY, Oliver
  London, W2 6BY (GB)
• ALMEROTH, Björn
  London, W2 6BY (GB)
• AGARWAL, Bharat
  London, W2 6BY (GB)

(74) Representative: Boult Wade Tennant LLP
Salisbury Square House
8 Salisbury Square
London EC4Y 8AP (GB)

(54) **TASK OFFLOADING METHOD FOR MULTI-ACCESS EDGE COMPUTING NETWORK**

(57) In a multi-access edge computing (MEC) network, a method of task offloading involves receiving a task offloading request from a client device, which includes one or more data packets each containing a task chunk. The network device also receives edge server data indicating available capacity at the edge server. The network device determines a subset of the data packets to be processed at the edge server by solving a 0-1 knapsack optimization problem, where the available capacity at the edge server is modeled as a knapsack, and each task chunk is modeled as an item. The determined subset of data packets is then transmitted to the edge server for processing.

FIG. 3

**Description**

TECHNICAL FIELD

The present invention relates to multi-access edge computing (MEC). Aspects of the invention relate to a method, a network device, and a MEC network.

BACKGROUND

Many user devices, like wearables and smartphones, have limited battery life. Some applications such as real-time language translation or generative AI (Gen-AI) applications require a large amount of processing power, which causes the battery of said devices to drain quickly. Furthermore, the processing capabilities of these devices are often constrained by their physical size and power consumption limits, making them unsuitable for highly demanding tasks.

To save battery, computationally heavy tasks can be offloaded to nearby edge servers, known as multi-access edge computing (MEC). This can be beneficial if mobile communication is less energy-intensive than processing tasks on the device itself, so offloading can help save battery life. For example, transmitting the required data to a nearby edge server over a mobile network can consume less energy than performing complex computations locally.

However, it is also important that certain tasks are executed with low latency. Processing at a nearby edge server can ensure lower latency compared to cloud processing, enhancing application performance. This is particularly relevant for applications with stringent real-time constraints where even minor delays can significantly impact user experience or system functionality. For instance, real-time applications like live translation, augmented reality, interactive gaming or any real-time assistance application benefit significantly from the reduced latency provided by edge computing.

Further, edge servers have limited capacity and may receive a large number of simultaneous requests from multiple user devices. Balancing the processing requirements can make decision making on which tasks are processed on the edge, and which are processed on the cloud or locally at the user device, a complicated process.

It is an aim of the invention to address one or more of the problems associated with the prior art.

SUMMARY OF INVENTION

Aspects of the invention are defined in the appended claims.

According to an aspect of the invention, a method of task offloading in a multi-access edge computing, MEC, network is provided. The method comprises: receiving, at a network device, from a client device, a task offloading request comprising one or more data packets, each data packet associated with a respective task chunk of a task to be offloaded; receiving, at the network device from an edge server of the MEC network, edge server data indicative of available capacity at the edge server; determining, by the network device in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and transmitting, from the network device to the edge server, the determined subset of the data packets for processing.

Advantageously, utilizing a 0-1 knapsack optimization problem enables the network device to flexibly allocate tasks to the edge server based on priority determined by the task parameters and an up to date capacity received from the edge server.

In some embodiments, the task parameters may be received as part of the task offloading request. In other embodiments, one or more of the task parameters may be stored locally to the network device or may be stored in another location accessible by the network device. For example, the task offloading request may comprise an ID indicative of the task or application associated with the task. The network device may retrieve the task parameters based on the received ID.

Optionally, the task parameters comprise at least one computation requirement associated with processing the task chunk, and wherein a weight of the task chunk in the 0-1 knapsack optimization problem is a function of the at least one computation requirement. For example, the weight of the task chunk may correspond to one of the at least one computation requirement, or may be a weighted combination of the at least one computation requirement. Optionally, the at least one computation requirement comprises one or more of a processing time, a memory requirement, a number of CPU cycles, a GPU specification, or a weighted combination thereof.

Optionally, the task parameters comprise at least one latency requirement associated with the task chunk, and a value of the task chunk in the 0-1 knapsack optimization problem is a function of the at least one latency requirement. For example, the value may be defined in dependence on a maximum latency $\Delta t_{max}$, i.e., a maximum delay tolerable by the application and/or an estimated latency $t_{tot}$ associated with the offloading process. For example, the value may be defined as

$$v_j = \frac{1}{\Delta t_{max} - t_{tot}}.$$

The estimated latency $t_{tot}$ may comprise a combination of a client processing time, an edge server processing time, a network device processing time, a round trip link latency between the client device and network device, and a round trip link latency between the network device and the edge server.

Optionally, the latency requirement associated with the task chunk comprises an end-to-end latency budget, the end-to-end latency budget comprising one or both of the maximum latency or the estimated latency. For example, the end-to-end latency budget may comprise one or more of: a processing time of the client device; a processing time of the edge server; a processing time of the network device; a link latency between the client device and the network device; and a link latency between the network device and the edge server.

Optionally, solving the 0-1 knapsack optimization problem comprises solving to maximize the objective function: $f(x) = \sum_{j=0}^{n} v_j x_j$ , wherein $n$ is the number of task chunks, $v_j$ is the value of task chunk j and $x_j$ is a binary value of 0 or 1 indicating whether the task chunk j is included in the knapsack, subject to the constraint:

$\sum_{j=0}^{n} r_j x_j \leq b$ , where $b$ is the available capacity at the edge server and $r_j$ is the weight of task chunk $j$.

The method may comprise: receiving at the network device from a further client device, a further task offloading request comprising one or more further data packets, each further data packet comprising further task parameters associated with a respective task chunk of a further task to be offloaded. Determining the subset of data packets to be processed at the edge server may be further in dependence on the further task parameters of the further task offloading request.

Optionally, the method comprises receiving, at the network device from the edge server, a processing result for the subset of data packets, and transmitting the processing result to the client device.

The method may further comprise determining, by the network device in dependence on the determined subset, an unprocessed subset of the data packets which cannot be processed by the edge server. The method may comprise transmitting, by the network device to the client device, an indication of the unprocessed subset of data packets. The method may further comprise receiving, at the network device from a second edge server of the MEC network, second edge server data indicative of available capacity at the second edge server; determining, by the network device in dependence on the task parameters of the unprocessed subset of data packets and the second edge server data, a second subset of the data packets to be processed at the second edge server; and transmitting, from the network device to the second edge server, the determined second subset of the data packets for processing. Optionally, the network device is configured to prioritize the edge server over the second edge server in dependence on one or both of: the available capacity of the edge server being higher than the available capacity of the second edge server, or a link latency between the network device and the edge server being less than a link latency between the network device and the second edge server.

Optionally, the network device is associated with a 5G or next generation base station, and the edge server is within a predetermined vicinity of the 5G or next generation base station.

The method may further comprise transmitting, by the network device to a second network device associated with a second 5G or next generation base station, the unprocessed subset of data packets, and determining, by the second network device, whether to process the unprocessed subset at a further edge server associated with the second 5G or next generation base station.

In some embodiments, the network device is associated with a plurality of 5G or next generation base stations.

Optionally, the task to be offloaded is associated with an application running on the client device, and the method comprises: receiving, from an application device associated with the application, a registration request including at least one representative task parameter associated with a representative task chunk of the task to be offloaded and an edge server application for deployment; and deploying, on the edge server, the edge server application for processing the task to be offloaded according to the registration request.

The method may comprise authenticating the client device with a policy control function, PCF, configured to provide a field indicating whether the client device is registered to use the network device for task offloading, wherein authenticating the client device comprises transmitting, from the network device to the PCF, an authentication request; and wherein the PCF is configured to, in response to the authentication request, transmit an authentication confirmation to the network device in dependence on whether the client device is registered.

According to another aspect there is provided a network device, in a multi-access edge computing, MEC, network, the network device comprising: a memory configured to store instructions; and at least one processor coupled to the memory and configured to execute the instructions to: receive, from a client device, a task offloading request comprising one or more data packets, each data packet comprising a respective task chunk of a task to be offloaded; receive, from an edge server of the MEC network, edge server data indicative of available capacity at the edge server; determine, in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and transmit the subset of the data packets to the edge server for processing.

Optionally, the task parameters comprise at least one computation requirement associated with processing the task chunk, and a weight of the task chunk in the 0-1 knapsack optimization problem is a function of the at least one computation requirement.

Optionally, the task parameters comprise at least one latency requirement associated with the task chunk, and wherein: a value of the task chunk in the 0-1 knapsack optimization problem is a function of the at least one latency requirement.

Optionally, the at least one processor is configured to solve the 0-1 knapsack optimization problem by solving to maximize the objective function:

$$f(x) = \sum_{j=0}^{n} v_j x_j$$

, wherein $n$ is the number of task chunks, $v_j$ is the value of task chunk $j$ and $x_j$ is a binary value of 0 or 1 indicating whether the task chunk j is included in the knapsack., subject to the constraint:

$$\sum_{j=0}^{n} r_j x_j \leq b$$

, where $b$ is the available capacity at the edge server and $r_j$ is the weight of task chunk $j$.

Optionally, the latency requirement associated with the task chunk comprises an end-to-end latency budget, the end-to-end latency budget comprising one or more of: a processing time of the client device; a processing time of the edge server; a processing time of the network device; a link latency between the client device and the network device; and a link latency between the network device and the edge server.

Optionally, the at least one computation requirement comprises one or more of a processing time, a memory requirement, a number of CPU cycles, a GPU specification, or a weighted combination thereof.

According to another aspect there is provided a multi-access edge computing, MEC, system, comprising a network device according to the above aspect; and an edge server configured to process the subset of the data packets.

According to another aspect there is provided non-transitory computer-readable storage medium, the computer-readable storage medium including instructions that when executed by a computer, cause the computer to: receive, at a network device, from a client device, a task offloading request comprising one or more data packets, each data packet comprising a respective task chunk of a task to be offloaded; receive, at the network device from an edge server of the MEC network, edge server data indicative of available capacity at the edge server; determine, by the network device in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and transmit, from the network device to the edge server, the determined subset of the data packets for processing.

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 illustrates an example MEC network.

FIG. 2 illustrates a MEC network in accordance with an embodiment.

FIG. 3 illustrates a method in accordance with one embodiment.

FIG. 4A illustrates a client device and network device according to one embodiment.

FIG. 4B illustrates an example data packet in accordance with one embodiment.

FIG. 5 illustrates a transmission of edge server data in accordance with one embodiment.

FIG. 6 illustrates a knapsack optimization problem in accordance with one embodiment.

FIG. 7 illustrates a step of the method of FIG. 3 in accordance with one embodiment.

FIG. 8 illustrates a MEC network in accordance with one embodiment.

FIG. 9 illustrates a schematic of a network device in accordance with one embodiment.

FIG. 10 illustrates a MEC network having a decentralized architecture in accordance with one embodiment.

FIG. 11 illustrates a MEC network having a centralized architecture in accordance with one embodiment.

FIG. 12 illustrates an example registration process in accordance with one embodiment.

FIG. 13 illustrates an example authentication process in accordance with one embodiment.

FIG. 14 illustrates an example link setup procedure in accordance with one embodiment.

DETAILED DESCRIPTON OF DRAWINGS

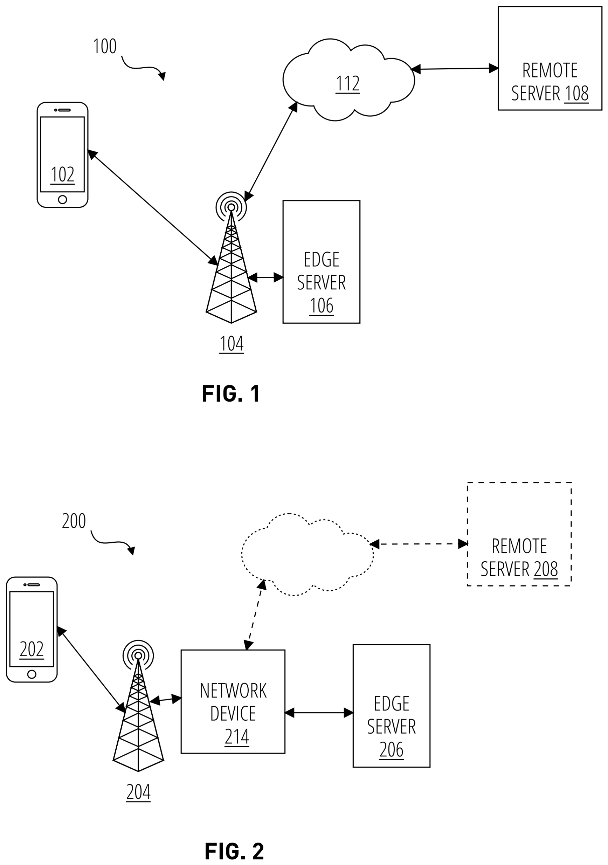

With reference to FIG. 1, there is shown an example multi-access edge computing (MEC) network 100. The MEC network 100 comprises at least one client device 102 such as a mobile phone, wearable device or the like. The client device 102 is configured to run one or more applications, which may be resource intensive and/or latency sensitive. For example, the client device 102 may be configured to run one or more real-time applications such as live translation, natural language processing (NLP) or augmented reality applications. As such, it may be desirable for the client device 102 to offload tasks of the application for processing remotely.

The client device 102 is configured to perform wireless communication over at least one mobile network 104, such as a 5G or next generation mobile network, and may communicate a request via the mobile network 104 to offload processing of an application task. The "next generation" mobile network may, for example, be a 6G mobile network.

Typically, the task may be offloaded to a remote server 108, which may be part of a cloud computing environment associated with the mobile application. As such, communication with the remote server 108 is performed via a wider network 112 such as the Internet, and may be associated with a high latency or delay in processing the task.

One or more edge servers 106 may be provided in the vicinity of a mobile network access point, such as a base station, of the mobile network 104 for providing edge processing capabilities. For example, the mobile network access point may be a gNodeB in a 5G network. That is, the one or more edge servers 106 are located to provide a very low-latency communication link between the base station and each edge server. Thus, instead of offloading the task to the remote server 108, in some situations it may be appropriate to offload the task to the edge server 106 for low latency processing.

However, each edge server 106 has limited capacity, and a number of client devices 102 may each be concurrently requesting edge processing of application tasks. This necessitates efficient and intelligent resource management to ensure optimal utilization of the edge infrastructure. Thus, it is desirable to optimize the allocation of task processing requested by each client device 102.

With reference to Figure 2, according to the present invention there is provided a network device 214 for performing a method of task offloading in a MEC network 200. The MEC network 200 comprises similar components to the MEC network 100, including a client device 202 and an edge server 206 in communication via a mobile network 204. The edge server 206 provides a lower latency processing capability for tasks offloaded by an application of the client device than a remote server 208 associated with a cloud environment of the application. That is, due to the lower latency link between the client device 202 and the edge server 206, processing at the edge server 206 is typically faster than processing at the remote server 208.

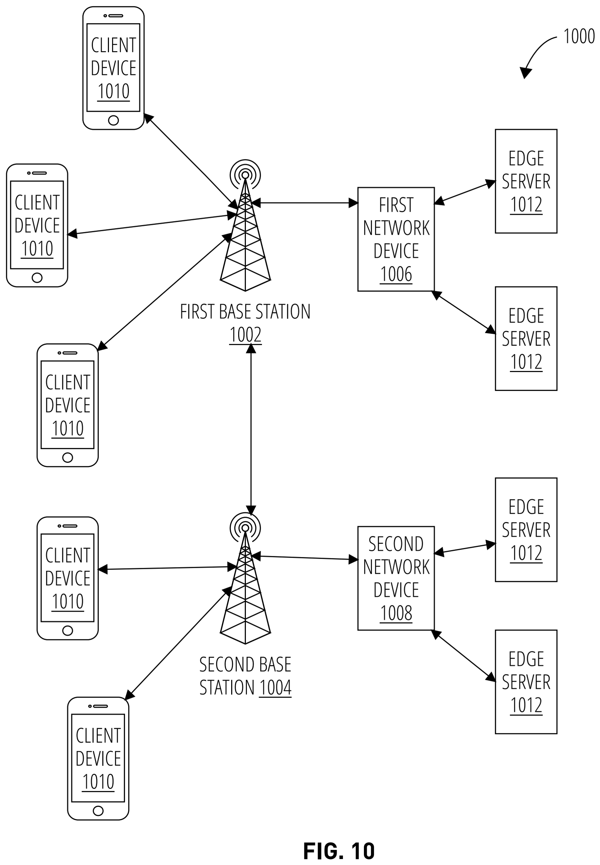

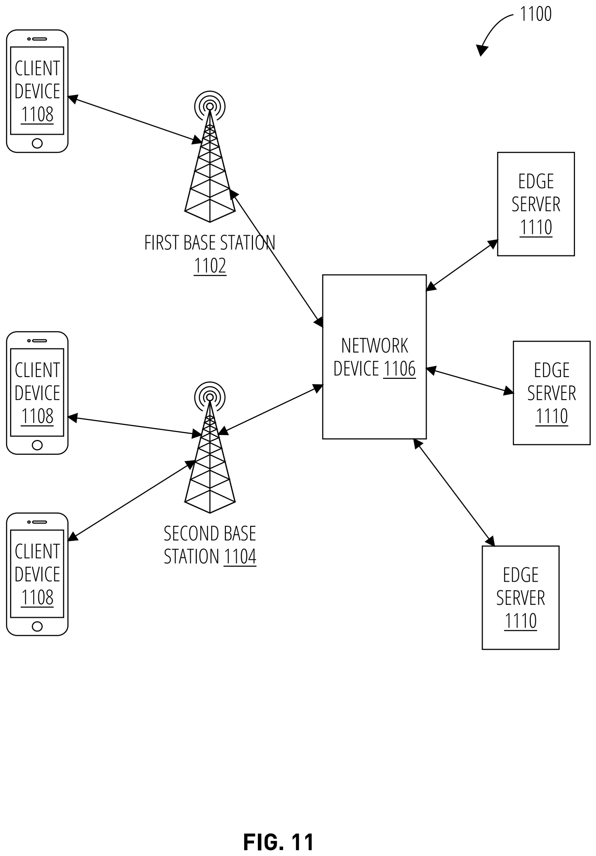

The network device 214 may be integrated with or otherwise associated with a base station of the mobile network 204, such as a 5G or next generation base station. Thus, a respective network device 214 may be provided at each of a plurality of base stations of the mobile network 204. In other embodiments the network device 214 may be provided at a central location in the mobile network 204 and may be in communication with a number of base stations of the mobile network 204. Embodiments according to both arrangements will be described with reference to FIG. 10 and FIG. 11.

The network device 214 is configured to process task offloading requests received from the client device 202, and determine a subset of tasks to be offloaded to the edge server 206, depending on both uplink information from the client device 202 and downlink information from the edge server 206, as will be explained.

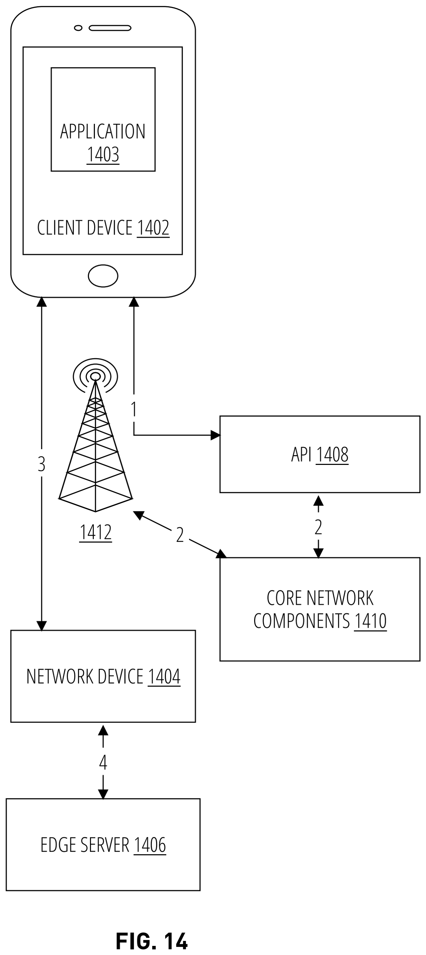

In some embodiments, the communication between the client device 202 and the network device 214, or between the network device 214 and the network 200, can leverage standardized network Application Programming Interfaces (APIs). Projects like CAMARA are defining such APIs to expose network capabilities in a developer-friendly and interoperable manner. Utilizing these APIs can streamline the integration of the task offloading method with the underlying network infrastructure. An example link setup procedure utilising such APIs will be described with reference to FIG. 14.

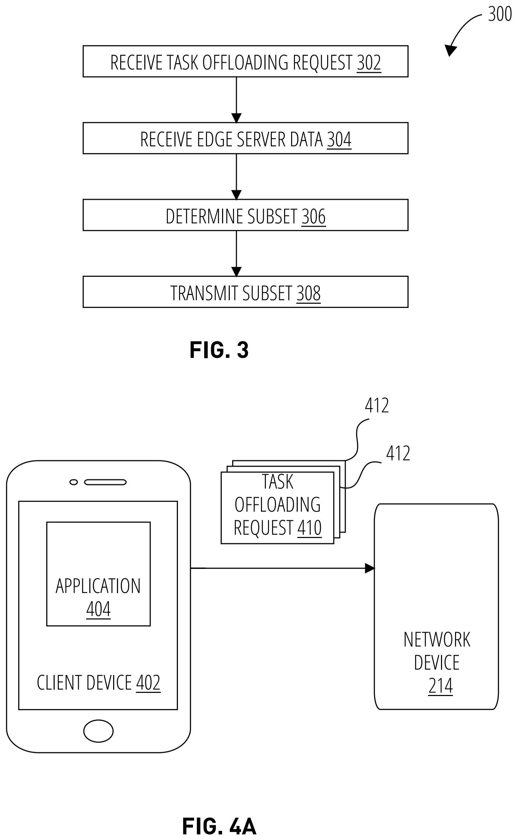

A method 300 of task offloading in a MEC network according to an embodiment is illustrated in FIG. 3 and will be described with reference to FIG. 3 to FIG. 7. The MEC network may be for example the MEC network 200 illustrated in FIG. 2, FIG. 8, FIG. 10 or FIG. 11.

The method comprises a step 302 of receiving, at a network device from a client device, a task offloading request comprising one or more data packets. The task offloading request may be communicated by the client device to the network device over a wireless network such as a 5G or next generation mobile network.

An example of step 302 according to one embodiment is illustrated in FIG. 4A. A client device 402 is illustrated as a mobile phone, however it will be appreciated that the client device 402 may be any electronic device with processing and wireless communication capabilities, such as a wearable device, a tablet, a laptop or the like. The client device 402 comprises memory and at least one processor (not shown) and the at least one processor is configured to execute at least one application 404. The application 404 may be any application for which edge processing may be desirable, such as a battery intensive application or a latency sensitive application. For example, the application 404 may be one of a live translation application, a natural language processing (NLP) application, an augmented reality application or a real-time assistance application, although it will be appreciated that this list is not exhaustive.

The client device 402 when executing the application 404 may determine to offload a task of the application 404 for remote processing, e.g., if the task is computationally intensive and exceeds a processing capability threshold set by the client device 402. For example, real-time tasks such as NLP tasks or real-time translation may require a large amount of processing capability and low latency.

The client device 402 is configured to communicate a task offloading request 410 to the network device 214 via the one or more mobile networks 204. The task offloading request 410 comprises one or more data packets 412, each data packet 412 associated with a respective task chunk of the task. That is, the task to be offloaded is segmented into task chunks, such as task chunks of predetermined size. The predetermined size can be application-specific and may be determined based on factors such as network bandwidth, expected processing time at the edge, and the overhead of packet transmission. For example, for a text generation application, each task chunk may comprise the generation of a predetermined number of tokens. As another example, for a speech-to-text application, each task chunk may comprise processing a predetermined length of audio data, such as a predetermined number of seconds of audio data. It will be appreciated that the limit of the task chunk may be varied and set appropriately for each application 404.

Each task chunk is packaged in a respective data packet 412 comprising a payload of the task chunk and optionally task parameters associated with the task chunk. The data packet 412 comprises the necessary payload to enable the edge server 206 to execute the task chunk. This payload typically includes the necessary data inputs for processing and optionally code or instructions required for execution of the payload at the edge server.

The task parameters may comprise uplink information associated with the task chunk for providing to the network device 214. The task parameters may be contained in the task offloading request 410, or may be preconfigured at the network device 214 for each application 404.

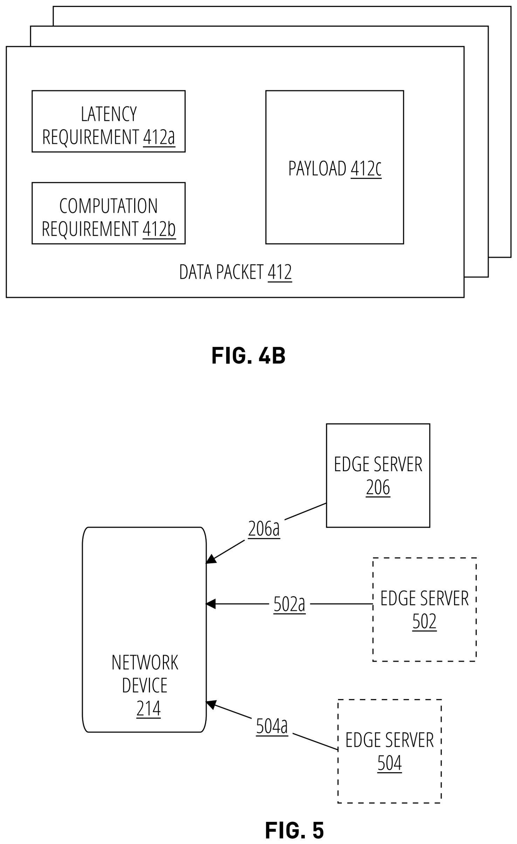

With reference to FIG. 4B, an example data packet 412 is illustrated according to one embodiment. The data packet 412 comprises a payload 412c for processing and optionally task parameters. Although illustrated as part of the data packet 412, in some embodiments the task parameters are retrieved at the network device 214 in dependence on the application 404 originating the data packet 412. The task parameters comprise at least one computation requirement 412b associated with processing the payload of the task chunk and at least one latency requirement 412a associated with the task chunk.

The computation requirement 412b or requirements 412b comprise one or more parameters defining a minimum capacity for the edge server 206 to process the task chunk. For example, the computation requirements 412b may comprise one or more of a processing time for processing the task chunk, a memory requirement for processing the task chunk, a number of CPU cycles required for processing the task chunk, and/or a GPU specification for processing the task chunk. In some embodiments, the computation requirement 412b may comprise a weighted combination of one or more of these parameters.

The at least one latency requirement 412a may comprise one or more Quality of Service (QoS) parameter associated with the task chunk. The QoS parameter(s) may comprise for example QoS parameter(s) standardized by a mobile communication standard such as 3GPP. For example, the at least one latency requirement 412a may comprise an end-to-end latency budget indicative of a maximum allowed time that the task chunk can take to be processed and communicated back to the client device 402.

In some embodiments, the task parameters including the at least one computation requirement 412b and/or the at least one latency requirement 412a may be pre-configured for the application 404 and may be stored locally at or accessible by the network device. Thus, the computation requirement 412b and/or the latency requirement 412a may not be transmitted as part of each task offloading request. In such an embodiment, the task offloading request may only comprise the payload 412c associated with each data packet 412 and an ID or other information indicating the application 404 such that the network device can retrieve the requisite task parameters.

The method 300 comprises a step 304 of receiving edge server data at the network device 214. An example step 304 according to one embodiment is illustrated in FIG. 5.

As shown in FIG. 5, the edge server 206 is configured to communicate edge server data 206a to the network device 214. The edge server data 206a is downlink information indicative of an available capacity at the edge server 206.

In some embodiments, the MEC network 200 comprises a plurality of edge servers 206, 502, 504 each in communication with the network device 214. In such an embodiment, step 304 comprises receiving, at the network device 214, respective edge server data 206a, 502a, 504a from each respective edge server indicative of an available capacity at the respective edge server.

Step 304 may in some embodiments be performed continuously or periodically. That is, the or each edge server 206 may provide updated edge server data to the network device 214 to indicate a real-time available capacity. In that way, the network device 214 can flexibly allocate processing tasks based on up to date resource availability.

The available capacity may be indicative of any available resource or resource limit at the edge server.

For example, the available capacity may comprise one or more parameters corresponding to the computation requirement 412b of the data packet 412. For example, the parameters may include an available processing time (available number of CPU cycles) at the edge server, an available memory at the edge server, and/or a GPU specification of the edge server. In some embodiments, the available capacity may be expressed as a weighted combination of one or more of these parameters.

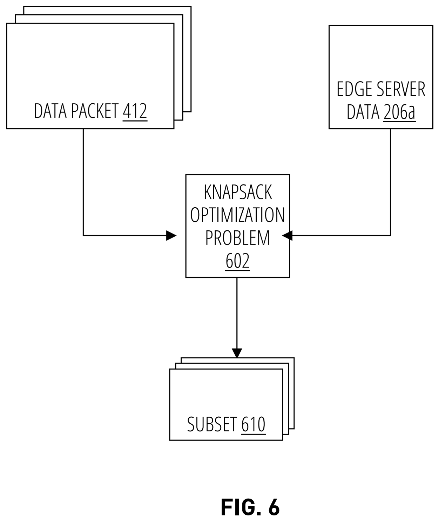

In step 306, the network device 214 is configured to determine a subset of the data packets 412 to be processed at the edge server 206, in dependence on the task parameters of each data packet 412 and the edge server data 206a. An example step 306 according to one embodiment is illustrated in FIG. 6.

The network device 214 is advantageously able to provide a reactive and flexible solution responding to real-time resource availability received via the downlink information provided by the edge server in step 304. The task parameters of each data packet 412 are used to prioritize task chunks depending on latency budget whilst ensuring the total computation requirements of the subset do not exceed the available capacity at the edge server 206. This is achieved according to the present invention by utilizing a 0-1 knapsack optimization problem 602 to balance the uplink requirements from the client device 402 with the downlink resource availability of the edge server 206.

A knapsack optimization problem is a type of resource allocation problem. Given a set of items with a respective weight and value, a subset of the items is selected to maximize the value of the subset whilst limiting the total weight of the selected subset to less than or equal to a capacity of the knapsack.

According to the present invention, the edge server 206 is modelled as a knapsack in the knapsack optimization problem 602 and the available capacity at the edge server 206 is modelled as a knapsack capacity. That is, the available capacity may be considered as the total weight capacity of the knapsack. As discussed, the available capacity may comprise one or more parameters. The total weight capacity of the knapsack may be modelled as a weighted combination of the one or more parameters, or a single one of the parameters. For example, the total weight capacity of the knapsack may be modelled as a total available memory at the edge server 206, a total number of CPU cycles available at the edge server 206, or a GPU specification of the edge server 206. If the capacity is modelled as a single parameter, in some embodiments step 306 comprises solving a plurality of knapsack optimization problems 602, one for each parameter of the edge server data 206a. In such an embodiment, each knapsack optimization problem 602 will be solved to provide a respective subset of the data packets. The smallest of these subsets may then be selected as the output of step 306.

Each respective task chunk, i.e., each data packet 412, is modelled as an item in the knapsack optimization problem 602. The task parameters of the data packet 412 are used to define the weight and the value of the item in the knapsack optimization problem 602.

The knapsack optimization problem 602 may be framed as how to maximize the objective function:

$$f(x) = \sum_{j=0}^{n} v_j x_j,$$

wherein n is the number of task chunks, i.e., the number of data packets 412 being considered for processing at the edge server. This may include the number of data packets 412 in the task offloading request 410 and/or may include additional data packets 412 from additional task offloading requests. Parameter $v_j$ is the value of task chunk j and $x_j$ is a binary value of 0 or 1 indicating whether the task chunk j is included in the knapsack.

The above maximization aim is subject to the constraint:

$$\sum_{j=0}^{n} r_j x_j \leq b,$$

where b is the total weight capacity of the knapsack (i.e., the available capacity at the edge server 206) and $r_j$ is the weight of task chunk j.

The weight $r_j$ of the task chunk may be determined in dependence on a function of the computation requirement 412b or requirements of the data packet 412 corresponding to task chunk *j*. The computation requirement 412b used as the weight may correspond to whichever parameter is used as the total weight capacity *b*. For example, if the total weight capacity *b* is a total memory available at the edge server, then the weight $r_j$ will correspondingly be a memory requirement of the task chunk j. If multiple knapsack optimization problems 602 are framed, a respective optimization problem may be set up for each pair of computation requirement 412b and available capacity parameter.

The value $v_j$ of the task chunk may be determined in dependence on a function of the latency requirement 412a of the data packet 412 corresponding to task chunk*j*.

For example, the value $v_j$ may be determined in dependence on an end-to-end latency budget of the data packet 412. The end-to-end latency budget is indicative of a maximum latency $\Delta t_{max}$, i.e., a maximum delay tolerable by the application 404, as well as an estimated latency $t_{tot}$ associated with the offloading process. One or more aspects of the end-to-end latency budget may be received as the latency requirements 412a of the data packet 412.

The value may be defined as follows:

$$v_j = \frac{1}{\Delta t_{max} - t_{tot}}.$$

The estimated latency $t_{tot}$ may comprise a combination of a client processing time, an edge server processing time, a network device processing time, a round trip link latency between the client device and network device, and a round trip link latency between the network device and the edge server. The client processing time defines a time taken by the client device 402 to send and process the task offloading request 410. The edge server processing time includes a waiting time and/or a processing time of the task chunk at the edge server 206. The network device processing time defines a time taken by the network device to process the task offloading request. The link latency from the client device 402 to the network device 214 is indicative of a worst-case round-trip latency of the communication link between the client device 402 and the network device 214. Likewise, the link latency from the network device 214 to the edge server 206 is indicative of a worst-case round-trip latency of the communication link between the network device 214 and edge server 206.

The value may further be adjusted depending on any application specific priority associated with the application 404. The network device 214 may be receiving a number of task offloading requests from a number of client devices using a number of applications. Some applications or tasks may be assigned a higher priority or importance. This may be implemented by using a priority weighting:

$$v_j = \alpha_1 \frac{1}{\Delta t_{max} - t_{tot}} + \alpha_2 \cdot p_A,$$

where $p_A$ is a priority value associated with the application 404 originating the task chunk j, and wherein the values $\alpha_1$, $\alpha_2$ are weights. The weights and priority value may be preconfigured at the network device 214, or may be received with the task offloading request 410.

Step 306 comprises solving the knapsack optimization problem 602. Solving the knapsack optimization problem 602 may comprise using any suitable optimization technique. Utilizing an adaptive optimization algorithm facilitates handling the dynamic and multidimensional nature of the problem. Suitable algorithms may include metaheuristics, such as Simulated Annealing (SA), Genetic Algorithms (GAs), Particle Swarm Optimization (PSO), and Ant Colony Optimization (ACO). The choice of metaheuristic parameters for the algorithm (e.g., cooling schedule for SA, mutation rate for GA, inertia weight for PSO) can be optimized based on observed performance metrics. Other suitable algorithms may include Reinforcement Learning (RL) techniques, such as Q-learning or Actor-Critic methods. This adaptive learning approach allows the network device 214 to continuously improve its task allocation strategy over time.

In some embodiments, any combination of the above techniques may also be implemented to solve the knapsack optimization problem 602.

The output of the solution will be a subset 610 of the data packets 412 of the task offloading request 410 allocated to the knapsack, i.e., a subset of task chunks j for which $x_j$ =1 in the above problem. At some times, it may be possible that the subset 610 will include all the data packets 412 of the task offloading request 410 if the available capacity of the edge server 206 is sufficiently high to cope with the whole task offloading request 410. At other times, the subset 610 may be empty, if the edge server 206 has no available capacity. At other times, the subset 610 will include a number of the data packets 412 less than the total number of data packets 412 but greater than zero, optimized based on the value and weight of each packet.

The method 300 comprises a step 308 of transmitting, from the network device to the edge server, the determined subset of data packets for processing.

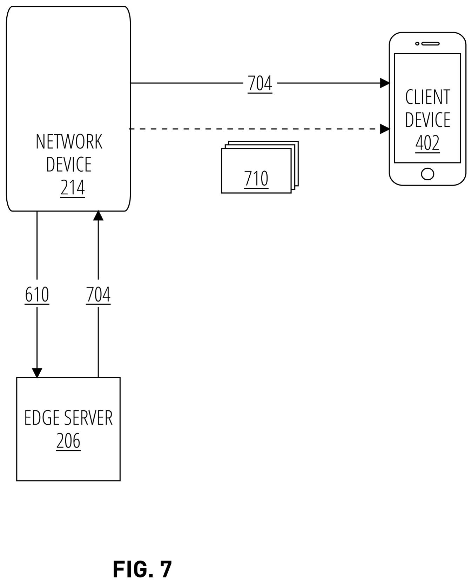

With reference to FIG. 7, there is illustrated an example of step 308 according to one embodiment. The network device 214 is configured to transmit the subset 610 determined as the output of the knapsack optimization problem 602 in step 306. The subset 610 of data packets 412 are transmitted to the edge server 206 for processing.

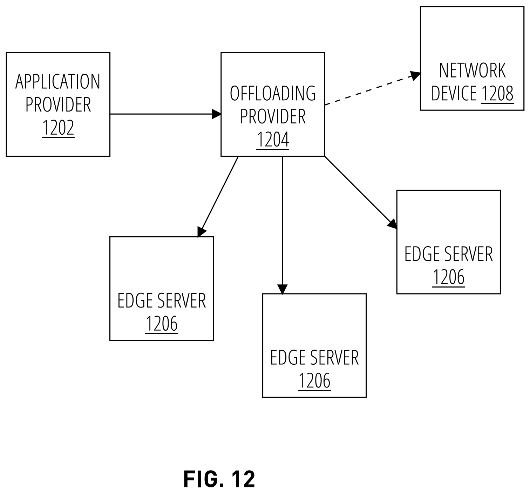

The edge server 206 then processes the transmitted subset 610 to determine a processing result 704. The edge server 206 processes the subset 610 according to the payload 412c of each task chunk. The edge server 206 may execute an edge server application to process the subset, wherein the edge server application is deployed at the edge server during a registration step for the application as will be described with reference to FIG. 12. The processing result 704 may then be transmitted from the edge server 206 back to the network device 214 and forwarded to the client device 402 for use by the application 404.

If the determined subset 610 is less than the total number of data packets 412, the network device 214 may be configured to determine an unprocessed subset 710 of the data packets 412 which cannot be processed by the edge server 206. The unprocessed subset 710 may include all data packets 412 of the task offloading request 410 not included in the subset 610.

The network device 214 may take a number of actions with respect to the unprocessed subset 710. The action taken may be dependent on the pre-configuration of the network device 214 and/or the wider MEC network 200. In an example embodiment wherein only one edge server 206 is available, the network device 214 may be configured to transmit an indication of the unprocessed subset 710 back to the client device 402 for processing locally. Alternatively, returning to Figure 2, the network device 214 may be configured to transmit the unprocessed subset 710 to the remote server 208 for cloud processing. Whether the unprocessed subset 710 is transmitted to the cloud or back to the client device 402 may be preconfigured by the application 404 depending on application specific requirements.

In other embodiments, the MEC network may comprise additional edge servers in communication with the network device 214 as illustrated in FIG. 5. FIG. 5 illustrates three edge servers 206, 502, 504, although any number of edge servers may be in communication with the network device 214.

In such embodiments, the network device 214 may receive edge server data 206a from the first edge server 206, second edge server data 502a from the second edge server 502 and third edge server data 504a from the third edge server 504 in step 304.

Steps 306 and 308 may then be performed for each edge server in turn. The network device 214 may determine an order of priority for offloading to the edge servers, and perform steps 306 and 308 for the highest priority edge server first. For example, the order of priority may be the first edge server 206, the second edge server 502 and then the third edge server 504. The order of priority may be indicative of a preference for offloading requests. The order of priority may be determined based on an available capacity as received in the edge server data 206a, 502a, 504a. For example, the edge server having the highest available capacity may be determined as the highest priority edge server. In other embodiments, a link latency between the network device 214 and each edge server may be used to determine the order of priority. For example, the edge server having the lowest link latency from the network device 214 may be prioritized. In other embodiments, the order of priority may be determined based on some combination of processing availability and link latency.

The method 300 may therefore comprise performing steps 306 and 308 for the highest priority edge server, e.g., the first edge server 206, first.

The steps 306 and 308 may then be repeated for the unprocessed subset 710 of data packets 412 with the edge server next in priority. For example, the network device 214 may be configured to determine a second subset of data packets 412 for processing at the second edge server 502 from the unprocessed subset 710 in a second iteration of step 306, and transmit the second subset of data packets 412 to the second edge server 502 in a second iteration of step 308.

This process may be repeated for any unprocessed subsets 710 with any further edge servers in order of priority until all data packets 412 of the task offloading request 410 have been transmitted for processing.

The entire method 300, and in particular step 306, may be performed periodically by the network device. That is, the network device may receive a continual or intermittent stream of task offloading requests as and when each client device requires edge processing. As described with reference to step 304, the edge server data may be periodically received for each edge server to reflect an updated capacity of the edge server. Thus, step 306 may be performed periodically or ad hoc to allocate the outstanding task chunks in the queue to an edge server.

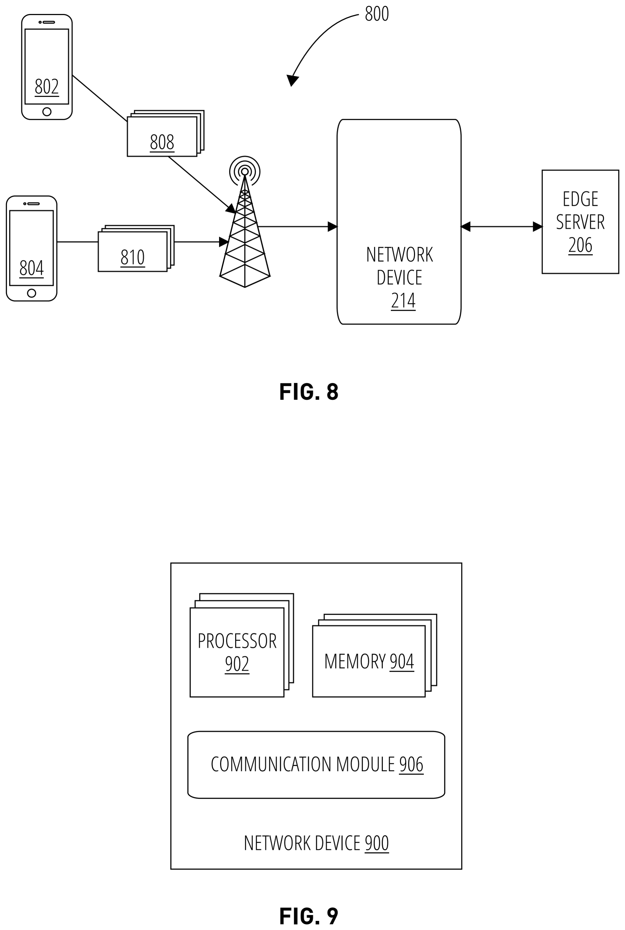

With reference to FIG. 8, there is shown a MEC network 800 according to an embodiment. The network device 214 may receive task offloading requests from multiple client devices. In the network 800, two client devices 802, 804 are illustrated, however the network device 214 may receive task offloading requests from any number of client devices. Each client device 802, 804 may transmit a respective task offloading request 808, 810 to the network device. Each task offloading request 808, 810 may be analogous to the task offloading request 410 described with reference to FIG. 4A and 4B, so repeated description will be omitted.

The network device 214 may be configured to perform steps 306 and 308 concurrently for the data packets associated with each task offloading request 808, 810. That is, in step 306 the entire collection of data packets received from both client devices may be provided as input to the knapsack optimization problem 602. Thus, tasks from multiple devices can be balanced and prioritized for offloading.

With reference to FIG. 9, there is shown a network device 900 according to an embodiment of the invention. The network device 900 may correspond to the network device 214 described with reference to preceding embodiments, and is configured to perform a method of task offloading in accordance with FIG. 3. The network device 900 comprises at least one processor 902 and at least one memory 904 coupled to the at least one processor 902. The memory 904 is configured to store instructions corresponding to the method of FIG. 3. The at least one processor 902 is configured to execute the instructions to perform the method of FIG. 3.

The network device 900 may be implemented within a MEC network such as the MEC network 200 or the MEC network 800. The network device 900 comprises a communication module 906 comprising hardware configured to perform wireless communication to facilitate communication between the network device 900 and other elements of the MEC network, such as communication with the client devices 402, 802, 804 and with the edge server(s) 206, 502, 504. The network device 900 may for example form part of a mobile communication network such as a 5G or next generation mobile communication network for processing task offloading requests in the mobile communication network.

The network device 900 may be implemented within the mobile communication network in several locations. According to some embodiments, the network device 900 is decentralized.

According to some embodiments, the network device 900 is decentralized in the MEC network. A MEC network 1000 according to a decentralized embodiment is illustrated in Figure 10. In such a decentralized embodiment, a first network device 1006 (corresponding to network device 900 or network device 214 previously described) is associated with a first base station 1002, which may be a 5G or next generation base station depending on the mobile communication network. The first network device 1006 may be integrated with the first base station 1002 or located within a predetermined vicinity of the first base station 1002.

Likewise, a second network device 1008 (corresponding to network device 900 or network device 214 previously described) is associated with a second base station 1004, which may be a 5G or next generation base station depending on the mobile communication network. The second network device 1008 may be integrated with the second base station 1004 or located within a predetermined vicinity of the second base station 1004.

Each of the first network device 1006 and second network device 1008 are in communication with one or more edge servers 1012 for performing the method 300 of task offloading. The first network device 1006 is configured to process task offloading requests from client devices 1010 through the first base station 1002, and the second network device 1008 is configured to process task offloading requests from client devices 1010 through the second base station 1004.

In such an embodiment, the MEC network 1000 is highly scalable. Further, the first network device 1006 may be configured to transmit any unprocessed subsets to the second network device 1008 and vice versa. In this way, if the first network device 1006 is not able to offload the processing of all task chunks to the neighboring edge servers, the remaining unprocessed task chunks may be communicated to a neighboring network device at a neighboring base station. This process may continue in a daisy chain manner until all task chunks are processed, or until an expected end-to-end latency exceeds the end-to-end latency budget for the task. In that case, any remaining task chunks cannot be processed with the required latency, and an indication may be transmitted back to the client device 1010 indicating the task cannot be offloaded.

According to other embodiments, the network device is centralized in the MEC network. A MEC network 1100 according to a centralized embodiment is illustrated in Figure 11. In such a centralized embodiment, the network device 1106 (corresponding to network device 900 or network device 214 previously described) is associated with a plurality of base stations 1104, 1102 and is in communication with one or more edge servers 1110. The network device 1106 is configured to process task offloading requests from client devices 1010 through each of the plurality of base stations 1102, 1104.

In such a centralised architecture, the network device 214 may be deployed at a central location in the network such as at a base station controller (BSC) which aggregates multiple base stations. In this case, the network device 1106 may coordinate task offloading for multiple base stations. In other embodiments the network device 1106 may be deployed in the Internet Service Provider (ISP) core network. The network device 1106 can be located at various locations within the ISP core network, e.g., at mobile switching center (MSC). In principle, the network device 1106 can be any computation server having the required communication links to the edge servers 1110 and base stations 1102, 1104. In the centralized architecture, the number of task offloading requests from client devices 1108 to the network device 1106 is higher than for a given network device in the decentralized model. However, the centralized architecture allows the network device 1106 to have an overarching knowledge of the resource availability across the wider network.

According to some embodiments, the method 300 may comprise a registration step (not shown) for each application 404 using the task offloading service. An example registration process is illustrated in FIG. 12.

The application 404 running on the client device 402 is managed by an application provider 1202. The application provider 1202 may register the application 404 with an offloading provider 1204 of the MEC network. The registration step comprises receiving, by the offloading provider 1204, a registration request for the application 404 from the application provider 1202.

The registration request comprises at least an edge server application for deployment. The edge server application may be containerized. The registration step comprises deploying, on each edge server 1206 of the MEC network, the edge server application for processing the task to be offloaded according to the registration request.

The registration request may further comprise representative task parameters associated with a representative task chunk. That is, the registration request may comprise task parameters that are used to specify the weight and value of task chunks of the application 404 during offloading via the method 300.

For example, the representative task parameters may comprise representative latency requirements 412a and/or computation requirements 412b as previously described. The edge server application deployed on the edge server enables the edge server to process the task chunks from the application 404.

In some embodiments, the representative task parameters may be further provided to the or each network device 1208 of the MEC network. In this way, the network device 1208 already has access to the relevant representative task parameters for each application 404 deployed to facilitate the resource allocation process. In such an embodiment, in the task offloading request the client device may only transmit an application ID and the data packets to be processed. The network device 1208 may then retrieve the relevant task parameters from the application ID.

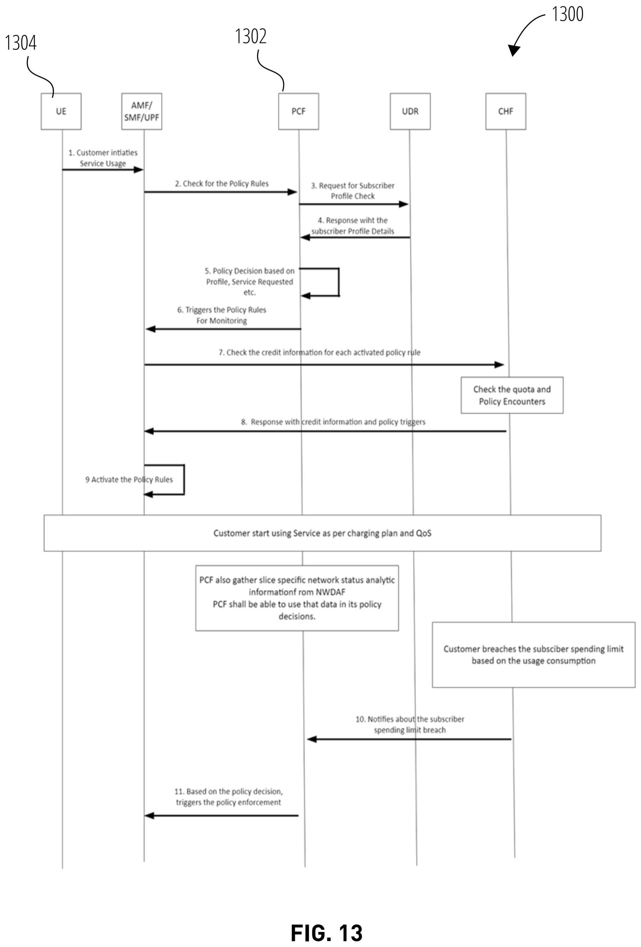

As shown in FIG. 13, an authentication process 1300 for each client device in the MEC network may be adapted to account for the task offloading method described herein.

FIG. 13 illustrates a high-level view of an authentication process 1300 of a client device in a mobile network.

Initiated by a client device 1304, a policy request is sent to an Access and Mobility Management Function (AMF). The AMF sends the policy request to a Policy Control Function (PCF) 1302. The PCF 1302 makes a policy decision based on a profile of the client device 1304, a requested service, and/or other parameters, and returns the policy decision to the AMF to configure and enforce the network accordingly.

According to the present invention, the PCF 1302 of the authentication process may be extended to include an additional field for task offloading. The additional field specifies whether the client device 1302 has permission to use task offloading for a given application 404. If the additional field specifies that the task offloading is enabled for a given application 404, the AMF configures the network accordingly to provide the client device with the ability to send task offloading requests to the network device for offloading for a given application 404.

FIG. 14 illustrates an example link setup procedure for a client device 1402 running an application 1403 to perform edge processing using an edge server 1406.

In the illustrated embodiment, the link setup is performed using one or more application programming interfaces (APIs 1408). The APIs 1408 may be for example CAMARA Service APIs. The APIs 1408 act to simplify and enhance the integration of network capabilities (i.e. configuration QoS profiles) across operators using a network 1412.

The link setup procedure shown in FIG. 14 may be implemented in conjunction with any embodiment of the offloading method described herein.

The link setup procedure comprises four steps numbered 1 to 4 in FIG. 14. Steps 1, 2 and 3 illustrate the connection setup and step 4 defines the resultant task offloading. In step 1, Quality of service (QoS) parameters (bandwidth, latency, reliability) are negotiated between the application 1403 running on the client device 1402 and the APIs 1408 (for example, a Quality on demand (QoD) API 1408) implemented by an operator of the network 1412. In step 2, the negotiated parameters are configured in the core network and radio access network for the client device 1402 and application 1403. In step 3, the application 1403 can now establish a connection to the network device 1404 which coordinates the task offloading. In step 4, the actual task offloading process for the application can be executed. Step 4 may be performed according to any embodiment previously described.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

The following numbered clauses show further illustrative examples only:

1. A method of task offloading in a multi-access edge computing, MEC, network, the method comprising:

receiving, at a network device, from a client device, a task offloading request comprising one or more data packets, each data packet associated with a respective task chunk of a task to be offloaded;
receiving, at the network device from an edge server of the MEC network, edge server data indicative of available capacity at the edge server;
determining, by the network device in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and
transmitting, from the network device to the edge server, the determined subset of the data packets for processing.

2. The method of clause 1, wherein the task parameters comprise at least one computation requirement associated with processing the task chunk, and wherein:
a weight of the task chunk in the 0-1 knapsack optimization problem is a function of the at least one computation requirement.

3. The method of clause 1 or 2, wherein the task parameters comprise at least one latency requirement associated with the task chunk, and wherein:
a value of the task chunk in the 0-1 knapsack optimization problem is a function of the at least one latency requirement.

4. The method of clause 2 or 3, wherein solving the 0-1 knapsack optimization problem comprises solving to maximize the objective function:

$$f(x) = \sum_{j=0}^{n} v_j x_j,$$

wherein n is the number of task chunks, $v_j$ is the value of task chunk j and $x_j$ is a binary value of 0 or 1 indicating whether the task chunk j is included in the knapsack, subject to the constraint:

$$\sum_{j=0}^{n} r_j x_j \leq b,$$

where $b$ is the available capacity at the edge server and $r_j$ is the weight of task chunk j.

5. The method of any one of clauses 2 to 4, wherein the latency requirement associated with the task chunk comprises an end-to-end latency budget, the end-to-end latency budget comprising one or more of:

a processing time of the client device;
a processing time of the edge server;
a processing time of the network device;
a link latency between the client device and the network device; and
a link latency between the network device and the edge server.

6. The method any one of clauses 1 to 5, wherein the at least one computation requirement comprises one or more of a processing time, a memory requirement, a number of CPU cycles, a GPU specification, or a weighted combination thereof.

7. The method of any one of clauses 1 to 6, comprising:

receiving at the network device from a further client device, a further task offloading request comprising one or more further data packets, each further data packet comprising further task parameters associated with a respective task chunk of a further task to be offloaded; and
wherein determining the subset of data packets to be processed at the edge server is further in dependence on the further task parameters of the further task offloading request.

8. The method of any one of clauses 1 to 7, further comprising:

receiving, at the network device from the edge server, a processing result for the subset of data packets, and
transmitting the processing result to the client device.

9. The method of any one of clauses 1 to 8, further comprising determining, by the network device in dependence on the determined subset, an unprocessed subset of the data packets which cannot be processed by the edge server.

10. The method of clause 9, further comprising transmitting, by the network device to the client device, an indication of the unprocessed subset of data packets.

11. The method of clause 9 or 10, further comprising receiving, at the network device from a second edge server of the MEC network, second edge server data indicative of available capacity at the second edge server;

determining, by the network device in dependence on the task parameters of the unprocessed subset of data packets and the second edge server data, a second subset of the data packets to be processed at the second edge server; and
transmitting, from the network device to the second edge server, the determined second subset of the data packets for processing.

12. The method of clause 11, wherein the network device is configured to prioritize the edge server over the second edge server in dependence on one or both of:

the available capacity of the edge server being higher than the available capacity of the second edge server, or
a link latency between the network device and the edge server being less than a link latency between the network device and the second edge server.

13. The method of any one of clauses 1 to 12, wherein the network device is associated with a 5G or next generation base station, and wherein the edge server is within a predetermined vicinity of the 5G or next generation base station.

14. The method of clause 13 when dependent through clause 9, further comprising:

transmitting, by the network device to a second network device associated with a second 5G or next generation base station, the unprocessed subset of data packets, and
determining, by the second network device, whether to process the unprocessed subset at a further edge server associated with the second 5G or next generation base station.

15. The method of any one of clauses 1 to 12, wherein the network device is associated with a plurality of 5G or next generation base stations.

16. The method of any one of clauses 1 to 15 wherein the task to be offloaded is associated with an application running on the client device, and wherein the method comprises:

receiving, from an application device associated with the application, a registration request including at least one representative task parameter associated with a representative task chunk of the task to be offloaded and an edge server application for deployment; and
deploying, on the edge server, the edge server application for processing the task to be offloaded according to the registration request.

17. The method of any one of clauses 1 to 16, wherein the method comprises authenticating the client device with a policy control function, PCF, configured to provide a field indicating whether the client device is registered to use the network device for task offloading,

wherein authenticating the client device comprises transmitting, from the network device to the PCF, an authentication request; and
wherein the PCF is configured to, in response to the authentication request, transmit an authentication confirmation to the network device in dependence on whether the client device is registered.

18. A network device, in a multi-access edge computing, MEC, network, the network device comprising:

a memory configured to store instructions; and
at least one processor coupled to the memory and configured to execute the instructions to:

receive, from a client device, a task offloading request comprising one or more data packets, each data packet comprising a respective task chunk of a task to be offloaded;
receive, from an edge server of the MEC network, edge server data indicative of available capacity at the edge server;
determine, in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and
transmit the subset of the data packets to the edge server for processing.

19. The network device of clause 18, wherein the task parameters comprise at least one computation requirement associated with processing the task chunk, and wherein: a weight of the task chunk in the 0-1 knapsack optimization problem is a function of the at least one computation requirement.

20. The network device of any one of clauses 16 to 18, wherein the task parameters comprise at least one latency requirement associated with the task chunk, and wherein: a value of the task chunk in the 0-1 knapsack optimization problem is a function of the at least one latency requirement.

21. The network device of claim 19 or 20, wherein the at least one processor is configured to solve the 0-1 knapsack optimization problem by solving to maximize the objective function:

$$f(x) = \sum_{j=0}^{n} v_j x_j,$$

wherein n is the number of task chunks, $v_j$ is the value of task chunk j and $x_j$ is a binary value of 0 or 1 indicating whether the task chunk j is included in the knapsack., subject to the constraint:

$$\sum_{j=0}^{n} r_j x_j \leq b,$$

where $b$ is the available capacity at the edge server and $r_j$ is the weight of task chunk j.

22. The network device of any one of clauses 19 to 21, wherein the latency requirement associated with the task chunk comprises an end-to-end latency budget, the end-to-end latency budget comprising one or more of:

a processing time of the client device;
a processing time of the edge server;
a processing time of the network device;
a link latency between the client device and the network device; and
a link latency between the network device and the edge server.

23. The network device of any one of clauses 18 to 22, wherein the at least one computation requirement comprises one or more of a processing time, a memory requirement, a number of CPU cycles, a GPU specification, or a weighted combination thereof.

24. A multi-access edge computing, MEC, system, comprising:

a network device according to any one of clauses 18 to 23; and
an edge server configured to process the subset of the data packets.

25. A non-transitory computer-readable storage medium, the computer-readable storage medium including instructions that when executed by a computer, cause the computer to:

receive, at a network device, from a client device, a task offloading request comprising one or more data packets, each data packet comprising a respective task chunk of a task to be offloaded;
receive, at the network device from an edge server of the MEC network, edge server data indicative of available capacity at the edge server;
determine, by the network device in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and
transmit, from the network device to the edge server, the determined subset of the data packets for processing.

## Claims

1. A method of task offloading in a multi-access edge computing, MEC, network, the method comprising:

receiving, at a network device, from a client device, a task offloading request comprising one or more data packets, each data packet associated with a respective task chunk of a task to be offloaded;
receiving, at the network device from an edge server of the MEC network, edge server data indicative of available capacity at the edge server;
determining, by the network device in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and
transmitting, from the network device to the edge server, the determined subset of the data packets for processing.

2. The method of claim 1, wherein one or more of:

the task parameters comprise at least one computation requirement associated with processing the task chunk, and wherein a weight of the task chunk in the 0-1 knapsack optimization problem is a function of the at least one computation requirement; and

the task parameters comprise at least one latency requirement associated with the task chunk, and wherein a value of the task chunk in the 0-1 knapsack optimization problem is a function of the at least one latency requirement.

3. The method of claim 2, wherein solving the 0-1 knapsack optimization problem comprises solving to maximize the objective function:

$$f(x) = \sum_{j=0}^{n} v_j x_j,$$

wherein n is the number of task chunks, $v_j$ is the value of task chunk j and $x_j$ is a binary value of 0 or 1 indicating whether the task chunk j is included in the knapsack, subject to the constraint:

$$\sum_{j=0}^{n} r_j x_j \leq b,$$

where $b$ is the available capacity at the edge server and $r_j$ is the weight of task chunk j.

4. The method of claim 2 or claim 3, wherein the latency requirement associated with the task chunk comprises an end-to-end latency budget, the end-to-end latency budget comprising one or more of:

   a processing time of the client device;
   a processing time of the edge server;
   a processing time of the network device;
   a link latency between the client device and the network device; and
   a link latency between the network device and the edge server.

5. The method of any one of claims 1 to 4, wherein the at least one computation requirement comprises one or more of a processing time, a memory requirement, a number of CPU cycles, a GPU specification, or a weighted combination thereof.

6. The method of any one of claims 1 to 5, further comprising one or more of:

   receiving at the network device from a further client device, a further task offloading request comprising one or more further data packets, each further data packet comprising further task parameters associated with a respective task chunk of a further task to be offloaded, and wherein determining the subset of data packets to be processed at the edge server is further in dependence on the further task parameters of the further task offloading request; and

   receiving, at the network device from the edge server, a processing result for the subset of data packets, and transmitting the processing result to the client device.

7. The method of any one of claims 1 to 6, further comprising determining, by the network device in dependence on the determined subset, an unprocessed subset of the data packets which cannot be processed by the edge server, and optionally,

   further comprising transmitting, by the network device to the client device, an indication of the unprocessed subset of data packets.

8. The method of claim 7, further comprising:

   receiving, at the network device from a second edge server of the MEC network, second edge server data indicative of available capacity at the second edge server;
   determining, by the network device in dependence on the task parameters of the unprocessed subset of data packets and the second edge server data, a second subset of the data packets to be processed at the second edge server;
   transmitting, from the network device to the second edge server, the determined second subset of the data packets for processing, and optionally,
   wherein the network device is configured to prioritize the edge server over the second edge server in dependence on one or both of:

      the available capacity of the edge server being higher than the available capacity of the second edge server, or
      a link latency between the network device and the edge server being less than a link latency between the network device and the second edge server.

9. The method of any one of claims 1 to 8, wherein the network device is associated with a 5G or next generation base station, and wherein the edge server is within a predetermined vicinity of the 5G or next generation base station.

10. The method of claim 9 when dependent through claim 7, further comprising:

   transmitting, by the network device to a second network device associated with a second 5G or next generation base station, the unprocessed subset of data packets, and

determining, by the second network device, whether to process the unprocessed subset at a further edge server associated with the second 5G or next generation base station.

11. The method of any one of claims 1 to 10 wherein the task to be offloaded is associated with an application running on the client device, and wherein the method comprises:

receiving, from an application device associated with the application, a registration request including at least one representative task parameter associated with a representative task chunk of the task to be offloaded and an edge server application for deployment; and

deploying, on the edge server, the edge server application for processing the task to be offloaded according to the registration request.

12. The method of any one of claims 1 to 11, wherein the method comprises authenticating the client device with a policy control function, PCF, configured to provide a field indicating whether the client device is registered to use the network device for task offloading,

wherein authenticating the client device comprises transmitting, from the network device to the PCF, an authentication request; and wherein the PCF is configured to, in response to the authentication request, transmit an authentication confirmation to the network device in dependence on whether the client device is registered.

13. A network device, in a multi-access edge computing, MEC, network, the network device comprising:

a memory configured to store instructions; and at least one processor coupled to the memory and configured to execute the instructions to carry out the method of any one of claims 1 - 5.

14. A multi-access edge computing, MEC, system, comprising:

a network device according to claim 13; and an edge server configured to process the subset of the data packets.

15. A non-transitory computer-readable storage medium, the computer-readable storage medium including instructions that when executed by a computer, cause the computer to:

receive, at a network device, from a client device, a task offloading request comprising one or more data packets, each data packet comprising a respective task chunk of a task to be offloaded;

receive, at the network device from an edge server of the MEC network, edge server data indicative of available capacity at the edge server;

determine, by the network device in dependence on task parameters associated with each data packet and the edge server data, a subset of the data packets to be processed at the edge server, wherein determining the subset of the data packets comprises solving a 0-1 knapsack optimization problem, wherein the available capacity at the edge server is modelled as a knapsack, and each respective task chunk is modelled as an item; and

transmit, from the network device to the edge server, the determined subset of the data packets for processing.

EP 4 779 954 A1

FIG. 1

FIG. 2

300

RECEIVE TASK OFFLOADING REQUEST 302

↓

RECEIVE EDGE SERVER DATA 304

↓

DETERMINE SUBSET 306

↓

TRANSMIT SUBSET 308

**FIG. 3**

412

412

TASK OFFLOADING REQUEST 410

APPLICATION 404

CLIENT DEVICE 402

NETWORK DEVICE 214

**FIG. 4A**

**FIG. 4B**

**FIG. 5**

DATA PACKET <u>412</u>

EDGE SERVER DATA <u>206a</u>

KNAPSACK OPTIMIZATION PROBLEM <u>602</u>

SUBSET <u>610</u>

**FIG. 6**

NETWORK DEVICE 214

704 →

710

CLIENT DEVICE 402

610     704

EDGE SERVER 206

**FIG. 7**

**FIG. 8**

**FIG. 9**

**FIG. 10**

1100

CLIENT DEVICE 1108

FIRST BASE STATION 1102

CLIENT DEVICE 1108

SECOND BASE STATION 1104

CLIENT DEVICE 1108

NETWORK DEVICE 1106

EDGE SERVER 1110

EDGE SERVER 1110

EDGE SERVER 1110

**FIG. 11**

APPLICATION PROVIDER 1202

OFFLOADING PROVIDER 1204

NETWORK DEVICE 1208

EDGE SERVER 1206

EDGE SERVER 1206

EDGE SERVER 1206

**FIG. 12**

1304    1302    1300

UE    AMF/ SMF/UPF    PCF    UDR    CHF

1. Customer intiaties Service Usage

2. Check for the Policy Rules

3. Request for Subscriber Profile Check

4. Response wiht the subscriber Profile Details

5. Policy Decision based on Profile, Service Requested etc.

6. Triggers the Policy Rules For Monitoring

7. Check the credit information for each activated policy rule

Check the quota and Policy Encounters

8. Response with credit information and policy triggers

9 Activate the Policy Rules

Customer start using Service as per charging plan and QoS

PCF also gather slice specific network status analytic informationf rom NWDAF
PCF shall be able to use that data in its policy decisions.

Customer breaches the subsciber spending limit based on the usage consumption

10. Notifies about the subscriber spending limit breach

11. Based on the policy decision, triggers the policy enforcement

**FIG. 13**

APPLICATION
1403

CLIENT DEVICE 1402

1

API 1408

3

1412

2

2

CORE NETWORK
COMPONENTS 1410

NETWORK DEVICE 1404

4

EDGE SERVER 1406

**FIG. 14**

| | Europäisches Patentamt European Patent Office Office européen des brevets | **EUROPEAN SEARCH REPORT** | **Application Number** EP 26 15 2429 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHU WEIBO ET AL: "Joint Service Caching, Resource Allocation and Task Offloading for MEC-Based Networks: A Multi-Layer Optimization Approach", IEEE TRANSACTIONS ON MOBILE COMPUTING, IEEE SERVICE CENTER, LOS ALAMITOS, CA, US, vol. 23, no. 4, 16 April 2023 (2023-04-16), pages 2958-2975, XP011962687, ISSN: 1536-1233, DOI: 10.1109/TMC.2023.3268048 [retrieved on 2023-04-17] | 1-6, 8-11, 13-15 | INV. H04L67/10 G06F9/50 H04L67/1008 H04L67/1012 H04L67/289 |
| Y | * page 2958 - page 2967 * | 12 | |
| A | | 7 | |
| | ----- | | |
| X | YU TAOYUAN: "Optimizing Computational Efficiency in Autonomous Vehicles: Integrative Edge and Cloud Computing Strategies in Vehicular Networks", PROCEEDINGS OF THE 2023 3RD INTERNATIONAL CONFERENCE ON BIG DATA, ARTIFICIAL INTELLIGENCE AND RISK MANAGEMENT, ACMPUB27, NEW YORK, NY, USA, 12 April 2024 (2024-04-12), pages 5-12, XP098407710, DOI: 10.1145/3657529.3657538 ISBN: 979-8-4007-0633-2 | 1-7, 13-15 | TECHNICAL FIELDS SEARCHED (IPC) H04L G06F |
| Y | * page 5 - page 10 * | 12 | |
| | ----- | | |
| Y | US 2022/408333 A1 (RYU JINSOOK [US] ET AL) 22 December 2022 (2022-12-22) * abstract * * paragraphs [0283] - [0320]; figures 18A, 18B, 19, 21 * | 12 | |
| | ----- | | |
| | -/-- | | |

The present search report has been drawn up for all claims

| Place of search | Date of completion of the search | Examiner |
|---|---|---|
| The Hague | 4 March 2026 | Cattrysse, Tom |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 26 15 2429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TRAN TUYEN X ET AL: "COSTA: Cost-aware Service Caching and Task Offloading Assignment in Mobile-Edge Computing", 2019 16TH ANNUAL IEEE INTERNATIONAL CONFERENCE ON SENSING, COMMUNICATION, AND NETWORKING (SECON), IEEE, 10 June 2019 (2019-06-10), pages 1-9, XP033613347, DOI: 10.1109/SAHCN.2019.8824854 [retrieved on 2019-09-04] * page 1 - page 6 * ----- | 1-15 | |
| A | CHANYOUR TARIK ET AL: "Multi-policy Aware Offloading with Per-task Delay for Mobile Edge Computing Networks", 2019 INTERNATIONAL CONFERENCE ON WIRELESS NETWORKS AND MOBILE COMMUNICATIONS (WINCOM), IEEE, 29 October 2019 (2019-10-29), pages 1-6, XP033678869, [retrieved on 2019-12-24] * abstract * * paragraphs [00II] - [00VI] * ----- | 1-15 | **TECHNICAL FIELDS SEARCHED (IPC)** |

The present search report has been drawn up for all claims

| Place of search | Date of completion of the search | Examiner |
|---|---|---|
| The Hague | 4 March 2026 | Cattrysse, Tom |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 2429

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | Publication date | Patent family member(s) | | Publication date |
|---|---|---|---|---|
| US 2022408333 A1 | 22-12-2022 | CN | 115316039 A | 08-11-2022 |
| | | EP | 4082290 A1 | 02-11-2022 |
| | | EP | 4521718 A2 | 12-03-2025 |
| | | US | 2022408333 A1 | 22-12-2022 |
| | | US | 2025330888 A1 | 23-10-2025 |
| | | WO | 2021174189 A1 | 02-09-2021 |

EPO FORM P0459

For more details about this annex : see Official Journal of the European Patent Office, No. 12/82